# EUROPÄISCHE PATENTSCHRIFT

(11) **EP 1 944 423 B1**
(45) Veröffentlichungstag und Bekanntmachung des Hinweises auf die Patenterteilung: **25.06.2014**
(21) Anmeldenummer: 08000198.5
(22) Anmeldetag: 08.01.2008
(51) Int. Cl.: E04B 1/88, E04B 1/76, E04B 1/82, F16L 59/00

(54) **Dämmstoffmaterial auf der Basis nachwachsender Rohstoffe**
Insulation material based on renewable resources
Matériau isolant à base de matières premières renouvelables

(30) Priorität: 11.01.2007 DE 102007001740
(43) Veröffentlichungstag der Anmeldung: 16.07.2008
(73) Patentinhaber: Meier, Richard, 76229 Karlsruhe (DE)
(72) Erfinder: Meier, Richard, 76229 Karlsruhe (DE)
(74) Vertreter: Lenz, Steffen

(56) Entgegenhaltungen:
- DE-A1- 10 017 202
- DE-C1- 19 954 474
- DE-U1-202005 012 457

## Beschreibung

Die Erfindung betrifft die Verwendung nachwachsender Rohstoffe als Dämmstoffmaterial zur Wärme- und/oder Schalldämmung von Gebäuden oder technischen Einrichtungen. Sie bezieht sich ferner auf ein formstabiles Dämmelement auf der Basis von nachwachsenden Rohstoffen zur Wärme- und/oder Schalldämmung von Gebäuden oder technischen Einrichtungen.

Herkömmliche Dämmstoffe bestehen üblicherweise aus Polymerschäumen, z.B. Polystyrol, welche in Form von Platten bzw. Verbundplatten zur Wärme- bzw. Schallisolierung von Gebäuden, wie Wohn-, Büro- oder Fabrikgebäuden, Lärmschutzwänden und dergleichen, aber auch von technischen Einrichtungen, wie Klima- und Lüftungsanlagen etc., zum Einsatz kommen. Nachteilig ist neben der negativen Kohlendioxidbilanz insbesondere der Bedarf an fossilen Rohstoffen, insbesondere Erdöl, aus welchen die Polymere für solche synthetischen Dämmstoffe gewonnen werden.

Um diesen Nachteilen zu begegnen, welche mit der zunehmenden Verknappung von fossilen Rohstoffen an Bedeutung gewinnen, gehen neuere Bestrebungen dahin, anstelle von synthetischen Dämmstoffen solche auf der Basis von nachwachsenden Rohstoffen oder auf der Basis von Altrohstoffen einzusetzen. Hierbei seien beispielhaft neben tierischen Rohstoffen, z.B. auf der Basis von Schafswolle, pflanzliche Rohstoffe in Form von Stroh- und Holzwolle, Cellulose-, Hanf-, Baumwoll-, Kokos-, Flachs-, Schilf- und Jutefasern erwähnt (DE 43 17 239 A1). Der Nachteil solcher pflanzlicher Rohstoffe besteht vornehmlich einerseits in der leichten Entflammbarkeit, was eine zusätzlich, verhältnismäßig kostenintensive Behandlung dieser Materialien mit feuerhemmenden Substanzen erfordert, um die entsprechenden Bauvorschriften einhalten zu können. Andererseits enthalten solche Rohstoffe grundsätzlich Proteine, wodurch zusätzlich eine Behandlung mit Fungiziden bzw. Pestiziden notwendig ist, um einen Befall der aus diesen Materialien erzeugten Dämmstoffe mit Bakterien, Pilzen und Insekten - soweit möglich - zu verhindern und einer mit einem Fäulnisbefall einhergehenden Geruchsbelästigung vorzubeugen.

Eine Pflanze, deren Fasern im Vergleich mit den vorgenannten Pflanzen eine relativ hohe Feuerfestigkeit und eine demgegenüber bessere Verrottungsfestigkeit besitzen, ist das Seegras, dessen Einsatz zur Wärme- und Schalldämmung z.B. aus der DE 199 54 474 C1, DE 100 17 202 A1 und DE 20 2005 012 457 U1 bekannt ist. Hierzu werden die in relativ großen Mengen zur Verfügung stehenden Seegrasblätter getrocknet, gereinigt und gehäckselt und entweder als lose Schüttung verwendet oder mittels Bindern oder Web-/Nadeltechniken zu mehr oder minder formstabilen Dämmstoffplatten verarbeitet.

Indes ist auch Seegras hinsichtlich der Verwendung als Dämmstoffmaterial mit nicht unerheblichen Nachteilen behaftet. So erfordert Seegras aufgrund der Hydrophilie seiner Blätter und des hierin gespeicherten Wassers eine aufwendige Trocknung mittels thermischer Prozesse, welche einen erheblichen Energiebedarf besitzen. Darüber hinaus enthält Seegras - wenn auch in geringerem Umfang - Proteine, welche Maßnahmen erfordern, um einen Befall durch Fäulnis, Bakterien und Pilze zu verhindern. Des weiteren resultiert die gute Feuerbeständigkeit insbesondere aus einem sehr hohen Kochsalzgehalt (Natriumchlorid), welcher zu einer hohen Hygroskopizität führt, was sich bei mit Seegras gedämmten Gebäuden als problematisch erwiesen hat, da die Feuchteaufnahme des Dämmstoffmaterials insbesondere während der kalten Jahreszeiten zu Schimmelbildung an den benachbarten Wänden führen kann. Die mit dem hohen Kochsalzgehalt verbundene Korrosivität bedingt überdies den Einsatz korrosionsfester Materialien, wie Edelstahl, z.B. für konstruktive Rahmen und Träger, Armierungen und dergleichen, welche - und sei es auch nur über Luftfeuchtigkeit - mit dem Dämmstoffmaterial in leitfähiger Verbindung stehen, was in vielen Fällen einen unverhältnismäßig hohen Kostenaufwand bedeuten kann. Schließlich kann das extensive Sammeln von Seegras mittels schweren Gerätschaften, wie Baggern, Radladern und dergleichen, auch zu Umweltschäden führen, zumal das an Stränden abgelagerte Seegras aus ökologischen Gründen wieder in das Meer zurück gespült werden sollte, weil es ein wertvoller Dünger und Nährstoff für die Kleinlebewesen der Seegraswiesen darstellt.

Der Erfindung liegt die Aufgabe zugrunde, ein neuartiges Dämmstoffmaterial sowie ein solches enthaltendes Dämmstoffelement auf der Basis von nachwachsenden Rohstoffen zur Wärme- und/oder Schalldämmung von Gebäuden und technischen Einrichtungen vorzuschlagen, welches preiswert und in großen Mengen verfügbar sowie einfach verarbeitbar ist und insbesondere die vorgenannten Nachteile von bekannten natürlichen Dämmstoffmaterialien vermeidet.

Erfindungsgemäß wird diese Aufgabe, gemäß den Merkmalen des Anspruchs 1, durch die Verwendung von Fasern aus den Wurzelballen, den sogenannten "Neptun-" oder "Meerbällen", von Wurzelballen bildendem Seegras, insbesondere aus der Gruppe der Spezies Posidonia *oceanica,* Posidonia *australis* und/oder Cymodocea *nodosa,* als Dämmstoffmaterial auf der Basis von nachwachsenden Rohstoffen zur Wärme- und/oder Schalldämmung von Gebäuden oder technischen Einrichtungen, welches die genannten Fasern enthält, gelöst.

Überraschenderweise wurde gefunden, daß die Fasern solcher auch mit "Neptunbällen" oder "Meerbällen" bezeichneten Wurzelballen von Wurzelballen bildendem Seegras, insbesondere aus der Gruppe der Spezies Posidonia *oceanica* und/oder Posidonia *australis* aus der Gattung der Neptungräser bzw. der Spezies Cymodocea *nodosa* aus der Gattung der Tanggräser, exzellente Wärme- und Schalldämmungseigenschaften besitzen, während sie zugleich aufgrund praktisch nicht vorhandener Proteine höchst langzeitverrottungsbeständig und somit gegen einen Befall von Fäulnis, Bakterien, Pilzen und Insekten resistent sind. Die Wurzelballen sowie deren Fasern sind darüber hinaus - im Gegensatz zu deren Blättern bzw. dem Seegras selbst - in hohem Maße hydrophob, so daß sie anläßlich ihrer Verarbeitung als Dämmstoffmaterial keine nennenswerte Trocknungsschritte erfordern und bereits nach kurzer Lagerung keinerlei Wasser mehr enthalten. Insbesondere sind sie im wesentlichen frei von Salzen, wie Natriumchlorid, so daß sie in keiner Weise korrosiv wirken und darüber hinaus zwar Luftfeuchtigkeit aufzunehmen vermögen, wie dies auch bei herkömmlichen Dämmaterialien der Fall und in gewissem Maße auch erwünscht ist, jedoch keine Luft-feuchtigkeit im Übermaß binden, was, wie bereits erwähnt, im Zusammenhang mit einem Dämmstoffmaterial für Gebäude problematisch ist. Gleichwohl sind sie überraschenderweise nicht entflammbar und genügen somit den gängigen Brandschutzvorschriften, ohne daß weitere Behandlungen oder Imprägnierungen mit feuerhemmenden Substanzen, wie beispielsweise Borverbindungen, erforderlich wären.

Die Wurzelballen oder "Neptun-" bzw. "Meerbälle" von Wurzelballen bildendem Seegras der Spezies Posidonia *oceanica,* Posidonia *australis* und Cymodocea *nodosa* sind im wesentlichen eiförmig und besitzen in der Regel die Größe des einbis zweifachen eines Hühnereis. Sie bestehen aus einem relativ kompakten Gewirke feiner Fasern mit einer Dichte von etwa 40 kg/m³ und lassen sich sehr einfach, beispielsweise durch manuelles Scheren bzw. Zerreiben, zerfasern. Es wird vermutet, daß es sich bei diesen Fasern neben Fasern unmittelbar von der Wurzel bzw. dem Rhizom (auch) um Blattrippen und gegebenenfalls auch Blattscheiden von solchen Gattungen von Seegras (wie insbesondere aus den Gattungen Posidonia *oceanica,* Posidonia *australis* und Cymodocea *nodosa,* welche im Flachwasserbereich von Meeren bis in Tiefen von etwa 50 m angesiedelt sind) handelt, bei welchen die Blattrippen am Rhizom ansetzen und sich vom Ansatz der Wurzel bis ins Blatt hinein erstrecken, wobei die Blattrippen nach Verrottung des demgegenüber weicheren, chlorophyllhaltigen Blattmaterials übrig bleiben. Die ball- bzw. eiförmigen Gebilde der Wurzelballen kommen vermutlich dadurch zustande, indem diese Fasern nach Ablösen von der Pflanze während des Aufenthaltes im Brandungsbereich des Meeres infolge der Wellenbewegungen agglomerieren und die Agglomerate an Land gespült werden, wobei dieses Phänomen insbesondere auf sandigem Untergrund zu beobachten ist. Aufgrund ihres relativ hydrophoben Charakters trocknen die Wurzelballen dann in kurzer Zeit und lassen sich somit auf sehr einfache und kostengünstige Weise sammeln.

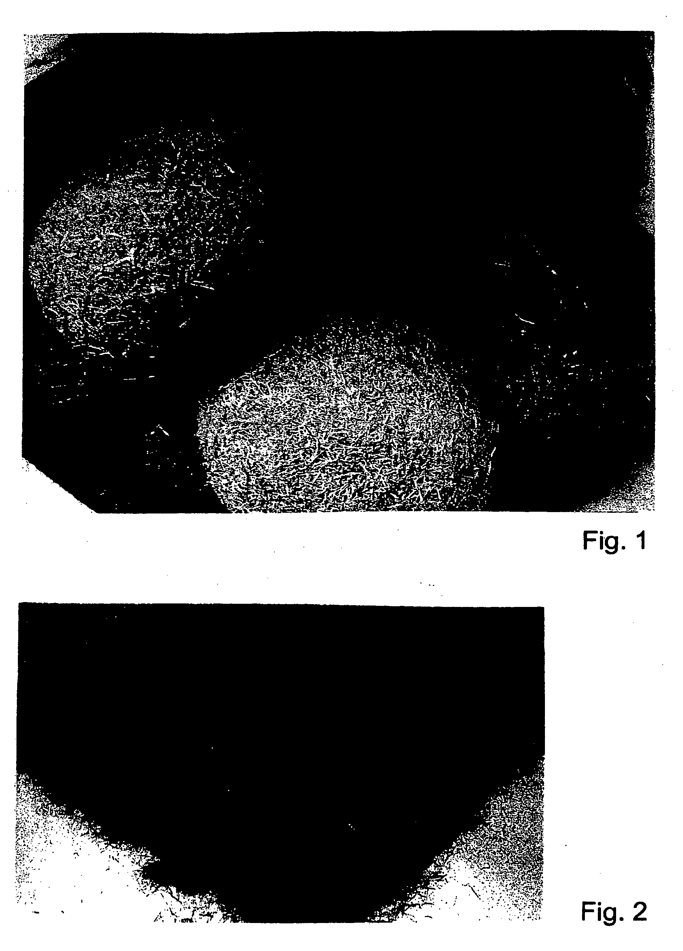

In Fig. 1 sind exemplarisch Wurzelballen ("Neptun-" oder "Meerbälle") der Spezies Posidonia *oceanica* dargestellt, während Fig. 2 dieselben Wurzelballen nach manueller Zerfaserung zeigt. Messungen des Wärmedurchlaßwiderstandes solchermaßen zerfaserten Materials (Posidonia *oceanica*) ergab einen sehr guten Widerstandswert R von 0,97 m²K/W bei einer Wärmeleitfähigkeit λ von 0,042 W/mK (jeweils ermittelt im Zweiplattenverfahren bei 20°C), was im wesentlichen den Werten von bekannten Dämmstoffmaterialien auf der Basis von nachwachsenden Rohstoffen, wie beispielsweise Hanffasern, entspricht.

Des weiteren wurde exemplarisch der Salzgehalt der erfindungsgemäß als Dämmstoffmaterial eingesetzten Fasern aus den Wurzelballen von Posidonia *oceanica* anhand von Leitfähigkeits- und Trocknungsrückstandsmessungen im Vergleich mit den zugehörigen Seegrasblättern ermittelt.

Zur Leitfähigkeitsmessung wurden 13,7 g des grob zerfaserten Materials gemäß Fig. 2 in 1 kg demineralisiertem Wasser suspendiert und die Leitfähigkeit der derart erzeugten Lösung so lange in kontinuierlichen Zeitabständen bei Raumtemperatur gemessen, bis keine Veränderung mehr festgestellt werden konnte. Zur Bestimmung der Leitfähigkeit diente ein kombiniertes pH-, Redox- und Leitfähigkeitsmeßgerät des Typs "multi 340i" der Firma "WTW" mit angeschlossener Leitfähigkeitsmeßzelle des Typs "Tetracon 325". Entsprechend wurde mit Seegrasblättern derselben Seegrasspezies verfahren. Die erhaltenen Werte sind in der nachfolgenden Tabelle zusammengestellt, wobei ersichtlich wird, daß die Wurzelballen eine um den Faktor 7,5 geringere Leitfähigkeit als die Blätter aufweisen, was auf einen erheblich geringeren Salzgehalt schließen läßt

**Tabelle:**

| Posidonia *oceanica* | | |
|---|---|---|
| | Wurzelballen, | Blätter *) |
| Leitfähigkeit direkt nach Suspendierung [µS/cm] | 182 | 2220 |
| Leitfähigkeit nach 86 h (jeweils konstant) [µS/cm] | 371 | 2800 |

| | | |
|---|---|---|
| (* Die Lagerung der Seegrasblätter in Wasser führte zu einer sichtbaren Gasentwicklung. | | |

Ferner wurde der anläßlich der oben beschriebenen Leitfähigkeitsmessung in Lösung gegangene Anteil der Probesubstanzen über den Trockenrückstand bei 105°C bestimmt. Hierzu wurden nach Beendigung der Leitfähigkeitsmessung von den jeweiligen Lösungen Teilmengen von 5 ml filtriert, auf einer Analysenwaage des Typs "BA 210S" der Firma "Sartorius" auf 0,1 mg genau gewogen und anschließend in einem Umlufttrockenschrank des Typs "UT 6420" der Firma "Hereaus" gänzlich eingedampft. Die Masse der zurückgebliebenen Feststoffe wurde durch erneutes Wiegen bestimmt. Als Mittelwert des Trockenrückstandes (bezogen auf die ursprünglich eingewogene Probenmasse) ergab sich für die Wurzelballen ein Massenanteil von 4,4%, während für die Seegrasblätter ein Massenanteil von 22,3% ermittelt wurde. Folglich beträgt der Trockenrückstand der Blätter mehr als das fünffache der Wurzelballen, was wiederum auf einen erheblich geringeren Salzgehalt der Wurzelballen hinweist. Die Experimente belegen somit die hervorragende Eignung der Wurzelballen von Wurzelballen bildendem Seegras zum Zwecke der Wärme- und Schalldämmung.

Während die erfindungsgemäß als Dämmstoffmaterial verwendeten Fasern aus den Wurzelballen, den sogenannten "Neptun-" oder "Meerbällen", von Wurzelballen bildendem Seegras, insbesondere aus der Gruppe der Spezies Posidonia *oceanica*, Posidonia *australis* und/oder Cymodocea *nodosa,* selbstverständlich auch in beliebigen Mischungsanteilen mit herkömmlichen Dämmstoffen auf der Basis von natürlichen oder synthetischen Materialien eingesetzt werden können, sieht eine bevorzugte Ausführungsform vor, daß das Dämmstoffmaterial zu einem überwiegenden Anteil Fasern aus den Wurzelballen von Wurzelballen bildendem Seegras enthält. Hinsichtlich der hierdurch erzielbaren, oben näher erläuterten Vorteile kann das erfindungsgemäße Dämmstoffmaterial bevorzugt wenigstens 60 Mass.-%, insbesondere wenigstens 70 Mass.-%, vorzugsweise wenigstens 80 Mass.-% und höchst vorzugsweise wenigstens 90 Mass.-%, Fasern aus den Wurzelballen von Wurzelballen bildendem Seegras enthalten, wobei es selbstverständlich auch im wesentlichen vollständig aus solchen Fasern bestehen kann.

Die erfindungsgemäß als Dämmstoffmaterial verwendeten Fasern aus den Wurzelballen von Wurzelballen bildendem Seegras können einerseits in Form einer Faserschüttung der zerfaserten Wurzelballen vorliegen, wobei sich ein solches Dämmstoffmaterial beispielsweise zum herkömmlichen Einblasen in Hohlräume zur Wand-, Dach- und Deckendämmung von Gebäuden sowie zur Trittschalldämmung anbietet, aber auch in Form von direkten Schüttungen einsetzbar ist. Das Dämmstoffmaterial kann andererseits in Form einer Kugelschüttung von im wesentlichen nicht zerfaserten Wurzelballen von Wurzelballen bildendem Seegras vorliegen, d.h. die etwa eiförmigen Wurzelballen können zu denselben Zwecken auch unmittelbar als Dämmstoffmaterial verwendet werden. Gleichfalls ist es selbstverständlich möglich, daß das Dämmstoffmaterial in Form einer Schüttung vorliegt, welche einerseits im wesentlichen nicht zerfaserte Wurzelballen, andererseits zerfaserte Wurzelballen von Wurzelballen bildendem Seegras enthält, so daß letztere z.B. vorzugsweise in den Hohlräumen der durch die ganzen Wurzelballen gebildeten Kugelpackung angereichert werden können.

Gemäß einer weiteren Ausführungsform kann das erfindungsgemäße Dämmstoffmaterial in Form eines Gebindes mit wenigstens einer Dämmkammer vorliegen, welche mit den Fasern aus den Wurzelballen von Wurzelballen bildendem Seegras befüllt ist. Die die - zerfaserten und/oder unzerfaserten - Wurzelballen aufnehmenden Gebinde können dabei flexibel, z.B. nach Art von Säcken, Kissen, Schläuchen oder dergleichen aufgebaut oder auch formstabil sein, wobei im letztgenannten Fall ebenfalls natürliche Materialien, z.B. solche auf der Basis von Holz, oder auch natürliche oder synthetische Kunststoffe in Frage kommen, welche eine oder mehrere Dämmkammern bilden. Im Falle formstabiler Gebinde können diese selbstverständlich modulartig zusammensetzbar sein, um für einen konstruktiv einfachen Einbau, z.B. in Gebäude, zu sorgen.

Zur Lösung der oben genannten Erfindungsaufgabe sieht die Erfindung, gemäß den Merkmalen des Anspruchs 9, ferner ein formstabiles Dämmstoffelement auf der Basis von nachwachsenden Rohstoffen zur Wärme- und/oder Schalldämmung von Gebäuden oder technischen Einrichtungen vor, bei welchem die Fasern aus den Wurzelballen von Wurzelballen bildendem Seegras immobilisiert sind. Solche Dämmstoffelemente können insbesondere in Form von Platten oder Blöcken gebildet und wiederum vorzugsweise modulartig zusammensetzbar sein, um einen einfachen Einbau in das zu dämmende Objekt zu gewährleisten.

Die Formstabilität des faserförmigen Materials kann, wie an sich bekannt, zweckmäßig durch Zusetzen von geeigneten Bindemitteln und/oder Zuschlagstoffen an die Fasern aus den Wurzelballen von Wurzelballen bildendem Seegras geschehen, wobei als Bindemittel sowohl anorganische als auch organische Binder in Betracht kommen, wie beispielsweise Gips (Calciumsulfat), Zement, Siliciumdioxid/Aluminiumoxid, Kalk (Calciumcarbonat), Wasserglas, Phosphatbinder, Kunstharzbinder etc. Als optional vorgesehene Zuschlagstoffe können beispielsweise Sand, feiner Kies sowie mineralische Stoffe, wie Lava, Lehm, Ton, Schiefer usw., eingesetzt werden.

Ein solches, z.B. in Form von Dämmstoffplatten gebildetes Dämmstoffelement kann einerseits einlagig aufgebaut sein, d.h. es umfaßt lediglich die gebundenen Fasern als Dämmstoffschicht, oder es weist einen mehrlagigen Aufbau mit wenigstens einer Trägerschicht auf, welche auf wenigstens eine, die Fasern aus den Wurzelballen von Wurzelballen bildendem Seegras enthaltende Dämmstoffschicht aufgebracht ist. Selbstverständlich ist je nach Anwendungszweck auch ein sandwichartig aufgebautes Dämmstoffelement möglich, wobei die eine Trägerschicht z.B. für eine gute Streich- oder Tapezierfähigkeit sorgt, während die an der dieser Schicht abgewandten Seite der Dämmstoffschicht angeordnete Trägerschicht eine einfache Befestigung des Dämmstoffelementes gewährleistet. Als solche Trägerschichten kommen z.B. Bahnen aus Folie, Papier oder Kartonverbund, Span- und Gipskartonplatten etc. in Frage.

## Patentansprüche

1. Verwendung von Fasern aus den Wurzelballen, den sogenannten "Neptun-" oder "Meerbällen", von Wurzelballen bildendem Seegras, insbesondere aus der Gruppe der Spezies Posidonia *oceanica,* Posidonia *australis* und/oder Cymodocea *nodosa,* als Dämmstoffmaterial auf der Basis von nachwachsenden Rohstoffen zur Wärme- und/oder Schalldämmung von Gebäuden oder technischen Einrichtungen, welches die genannten Fasern enthält.

2. Verwendung nach Anspruch 1, **dadurch gekennzeichnet, daß** das Dämmstoffmaterial zu einem überwiegenden Anteil Fasern aus den Wurzelballen von Wurzelballen bildendem Seegras enthält.

3. Verwendung nach Anspruch 1 oder 2, **dadurch gekennzeichnet, daß** das Dämmstoffmaterial wenigstens 60 Mass.-%, insbesondere wenigstens 70 Mass.-%, Fasern aus den Wurzelballen von Wurzelballen bildendem Seegras enthält.

4. Verwendung nach einem der Ansprüche 1 bis 3, **dadurch gekennzeichnet, daß** das Dämmstoffmaterial wenigstens 80 Mass.-%, insbesondere wenigstens 90 Mass.-%, Fasern aus den Wurzelballen von Wurzelballen bildendem Seegras enthält.

5. Verwendung nach einem der Ansprüche 1 bis 4, **dadurch gekennzeichnet, daß** das Dämmstoffmaterial in Form einer Faserschüttung von zerfaserten Wurzelballen von Wurzelballen bildendem Seegras vorliegt.

6. Verwendung nach einem der Ansprüche 1 bis 4, **dadurch gekennzeichnet, daß** das Dämmstoffmaterial in Form einer Kugelschüttung von im wesentlichen nicht zerfaserten Wurzelballen von Wurzelballen bildendem Seegras vorliegt.

7. Verwendung nach einem der Ansprüche 1 bis 4, **dadurch gekennzeichnet, daß** das Dämmstoffmaterial in Form einer Schüttung vorliegt, welche einerseits im wesentlichen nicht zerfaserte Wurzelballen, andererseits zerfaserte Wurzelballen von Wurzelballen bildendem Seegras enthält.

8. Verwendung nach einem der Ansprüche 1 bis 4, **dadurch gekennzeichnet, daß** das Dämmstoffmaterial in Form eines Gebindes mit wenigstens einer Dämmkammer vorliegt, welche mit den Fasern aus den Wurzelballen von Wurzelballen bildendem Seegras befüllt ist.

9. Formstabiles Dämmstoffelement auf der Basis von nachwachsenden Rohstoffen zur Wärme- und/oder Schalldämmung von Gebäuden oder technischen Einrichtungen, **dadurch gekennzeichnet, daß** es Fasern aus den Wurzelballen, den sogenannten "Neptun-" oder "Meerbällen", von Wurzelballen bildendem Seegras, insbesondere aus der Gruppe der Spezies Posidonia *oceanica,* Posidonia *australis* und/oder Cymodocea *nodosa,* enthält, wobei die Fasern aus den Wurzelballen von Wurzelballen bildendem Seegras immobilisiert sind.

10. Dämmstoffelement nach Anspruch 9, **dadurch gekennzeichnet, daß** die Fasern aus den Wurzelballen von Wurzelballen bildendem Seegras durch diesen zugesetzte Bindemittel und/oder Zuschlagstoffe immobilisiert sind.

11. Dämmstoffelement nach Anspruch 9 oder 10, **dadurch gekennzeichnet, daß** es einen mehrlagigen Aufbau mit wenigstens einer Trägerschicht aufweist, welche auf wenigstens eine, die Fasern aus den Wurzelballen von Wurzelballen bildendem Seegras enthaltende Schicht aufgebracht ist.

## Claims

1. Use of fibres from the root balls, also known as "Neptune balls" or "Sea balls", of root-ball-forming seagrass, in particular from the group of the species Posidonia *oceanica,* Posidonia *australis* and/or Cymodocea *nodosa,* as an insulation material based on renewable resources, for the thermal and/or acoustic insulation of buildings or technical installations, which insulation material comprises the abovementioned fibres.

2. Use according to Claim 1, **characterized in that** the insulation material comprises predominantly fibres from the root balls of root-ball-forming seagrass.

3. Use according to Claim 1 or 2, **characterized in that** the insulation material comprises at least 60% by weight, in particular at least 70% by weight, of fibres from the root balls of root-ball-forming seagrass.

4. Use according to one of Claims 1 to 3, **characterized in that** the insulation material comprises at least 80% by weight, in particular at least 90% by weight, of fibres from the root balls of root-ball-forming seagrass.

5. Use according to one of Claims 1 to 4, **characterized in that** the insulation material is present in the form of a fibre bed of disaggregated root balls of root-ball-forming seagrass.

6. Use according to one of Claims 1 to 4, **characterized in that** the insulation material is present in the form of a bed of essentially nondisaggregated root balls, in the form of spheres, of root-ball-forming seagrass.

7. Use according to one of Claims 1 to 4, **characterized in that** the insulation material is present in the form of a bed which comprises firstly essentially nondisaggregated root balls and secondly disaggregated root balls of root-ball-forming seagrass.

8. Use according to one of Claims 1 to 4, **characterized in that** the insulation material is present in the form of a bundle including at least one insulation chamber which is filled with the fibres from the root balls of root-ball-forming seagrass.

9. Dimensionally stable insulation element based on renewable resources for the thermal and/or acoustic insulation of buildings or technical installations, **characterized in that** it comprises fibres from the root balls, also known as "Neptune balls" or "Sea balls", of root-ball-forming seagrass, in particular from the group of the species Posidonia *oceanica,* Posidonia *australis* and/or Cymodocea *nodosa,* where the fibres from the root balls of root-ball-forming seagrass are immobilized.

10. Insulation element according to Claim 9, **characterized in that** the fibres from the root balls of root-ball-forming seagrass are immobilized by binders and/or additives added to them.

11. Insulation element according to Claim 9 or 10, **characterized in that** it has a multilayer construction with at least one support layer applied to at least one layer comprising the fibres from the root balls of root-ball-forming seagrass.

## Revendications

1. Utilisation de fibres provenant de pelotes de racines, appelées « pelotes de Neptune » ou « pelotes de mer », contenant du varech formant des pelotes de racines, notamment provenant du groupe d'espèces Posidonia oceanica, Posidonia australis et/ou Cymodocea nodosa, servant de matériau isolant fabriqué à partir de matières premières renouvelables servant à l'isolation thermique et/ou phonique de bâtiments ou d'installations techniques et contenant lesdites fibres.

2. Utilisation selon la revendication 1, **caractérisée en ce que** le matériau isolant contient majoritairement des fibres provenant de pelotes de racines issues de varech formant des pelotes de racines.

3. Utilisation selon la revendication 1 ou 2, **caractérisée en ce que** le matériau isolant contient au moins 60 % en masse, notamment au moins 70 % en masse, de fibres provenant de pelotes de racines issues de varech formant des pelotes de racines.

4. Utilisation selon l'une quelconque des revendications 1 à 3, **caractérisée en ce que** le matériau isolant contient au moins 80 % en masse, notamment au moins 90 % en masse, de fibres provenant de pelotes de racines issues de varech formant des pelotes de racines.

5. Utilisation selon l'une quelconque des revendications 1 à 4, **caractérisée en ce que** le matériau isolant prend la forme d'une motte fibreuse de pelotes de racines effilochées issues de varech formant des pelotes de racines.

6. Utilisation selon l'une quelconque des revendications 1 à 4, **caractérisée en ce que** le matériau isolant prend la forme d'une motte sphérique de pelotes de racines pour l'essentiel non effilochées issues de varech formant des pelotes de racines.

7. Utilisation selon l'une quelconque des revendications 1 à 4, **caractérisée en ce que** le matériau isolant prend la forme d'une motte contenant d'une part pour l'essentiel des pelotes de racines non effilochées, d'autre part des pelotes de racines effilochées issues de varech formant des pelotes de racines.

8. Utilisation selon l'une quelconque des revendications 1 à 4, **caractérisée en ce que** le matériau isolant prend la forme d'un emballage pourvue d'au moins un compartiment isolant rempli de fibres provenant de pelotes de racines issues de varech formant des pelotes de racines.

9. Élément en matériau isolant de forme stable à base de matières premières renouvelables servant à l'isolation thermique et/ou phonique de bâtiments ou d'installations techniques, **caractérisé en ce qu'**il contient des fibres provenant de pelotes de racines, appelées « pelotes de Neptune » ou « pelotes de mer » issues de varech formant des pelotes de racines, notamment provenant du groupe d'espèces Posidonia oceanica, Posidonia australis et/ou Cymodocea nodosa, les fibres provenant de pelotes de racines issues de varech formant des pelotes de racines étant immobilisées.

10. Élément en matériau isolant selon la revendication 9, **caractérisé en ce que** les fibres provenant de pelotes de racines issues de varech formant des pelotes de racines sont immobilisées par un ajout de moyen de nouage et/ou un complément de matière.

11. Élément en matériau isolant selon la revendication 9 ou 10, **caractérisé en ce qu'**il comporte une structure à couches multiples comportant au moins une couche de support appliquée au moins sur une couche contenant les fibres provenant de pelotes de racines issues de varech formant des pelotes de racines.
